Europäisches Patentamt

European Patent Office

Office européen des brevets

(11) Publication number: **0 348 875**
**A2**

# EUROPEAN PATENT APPLICATION

(21) Application number: 89111627.9

(51) Int. Cl.⁴: **C01B 17/05 , C25B 1/00**

(22) Date of filing: 26.06.89

(30) Priority: 28.06.88 JP 160445/88

(43) Date of publication of application:
**03.01.90 Bulletin 90/01**

(84) Designated Contracting States:
**BE CH DE FR GB IT LI NL SE**

(71) Applicant: **IDEMITSU KOSAN COMPANY LIMITED**
**1-1, Marunouchi 3-chome Chiyoda-ku Tokyo100(JP)**

(72) Inventor: **Noguchi, Hiroshi c/o IDEMITSU KOSAN CO. LTD**
**1280, Kamiizumi Sodegaura-machi**
**Kimitsu-gun**
**Chiba-ken(JP)**
Inventor: **Isshiki, Shingo c/o IDEMITSU KOSAN CO. LTD**
**1280, Kamiizumi Sodegaura-machi**
**Kimitsu-gun**
**Chiba-ken(JP)**

(74) Representative: **Patentanwälte TER MEER - MÜLLER - STEINMEISTER**
**Mauerkircherstrasse 45**
**D-8000 München 80(DE)**

(54) Method for the recovery of sulfur.

(57) A method for the recovery of sulfur involves contacting a hydrogen sulfide-containing gas with an iron salt aqueous solution containing a trivalent iron ion at a temperature which is above a melting point of sulfur. This method also enables a separation of hydrogen from the aqueous solution from which sulfur has been separated by electrochemical treatment as well as an iron salt aqeuous solution in which a trivalent iron ion is present.

This method permits an extremely high recovery of sulfur from hydrogen sulfide with high efficiency and purity.

Fig.

## METHOD FOR THE RECOVERY OF SULFUR

The present invention relates to a method for the recovery of sulfur and, more particularly, to a method for the recovery of sulfur from hydrogen sulfide in a closed system with an extremely high yield and purity.

Heretofore, hydrogen sulfide contained in acid gases and natural gases withdrawn during purification of petroleum is industrially treated by Claus method which partially burns it with air.

The Claus method permits a recovery of a sulfur moiety in hydrogen sulfide as sulfur, however, it has the disadvantage that a hydrogen moiety as water, not as hydrogen gas.

Recent years, as a resource of petroleum is running short, various measures have been extensively made to save energy in many fields. It is desired in this respect to recover the hydrogen moeity in hydrogen sulfide as hydrogen gas. In particular, when it is taken into consideration that hydrogen to be used for purification of petroleum is prepared by steam reforming method which consumes naphtha and natural gases, it is preferred that hydrogen is recovered from hydrogen sulfide contained in acid gases and natural gases exhausted during purification of petroleum.

It is known that hydrogen sulfide forms sulfur readily by oxidation upon contact with an aqueous solution containing a trivalent iron ion and that the trivalent iron ion is reduced to the divalentt iron ion. As processes for treating hydrogen sulfide using a reaction of the trivalent iron ion with hydrogen sulfide, Japanese Patent Publication No. 23,650/1981 discloses a process for treating hydrogen sulfide using as an absorbing solution, for example, an aqueous solution containing copper sulfate and ferric sulfate. This process involves absorbing hydrogen sulfide in the aqueous solution, and treating the resulting solution under oxygen pressures at temperatures above 120°C to yield sulfur in a molten state. The molten sulfur is then recovered and removed while the solution containing the copper sulfate and ferric sulfate is recovered as an absorbing solution for reusage. This process comprises oxidation in the presence of sulfur, thus forming impurities so that sulfur cannot be effectively separated and recovered. And it poses the problems that a velocity of absorbing hydrogen sulfide is not industrially sufficient and hydrogen of hydrogen sulfide cannot be recovered as hydrogen gas while oxygen is consumed.

Further, Japanese Patent Publication (laid-open) No. 181,706/1983 discloses a process which comprises allowing hydrogen sulfide react with a solution containing a trivalent iron ion at about 65°C to form sulfur and a solution containing a divalentt iron ion and then electrochemically converting the divalentt iron ion to the trivalent iron ion to thereby form hydrogen. This process presents the advantages that a velocity of absorbing hydrogen sulfide is so relatively fast and hydrogen is recovered. It suffers the disadvantage, however, that the formed sulfur is so fine in particle size that it is difficult to separate and recover, whereby sulfur recovered is not high enough in purity.

In order to improve those processes as have been described in prior patent publications and develop a process for recovering sulfur with high efficiency, we have proposed in Japanese Patent Publication (laid-open) No. 216,905/1987 that a process involves absorbing hydrogen sulfide, heating a solution that absorbes hydrogen sulfide elevated pressures and separating sulfur in a molten state. Although this process presents the advantage that sulfur is recovered in a molten state, however, the sulfur formed contains floating sulfur particles which are usually in a colloidal form and which are so highly sticky that they are poor in separability. Thus, an agitating vessel is required to aggregate the sulfur formed prior to separation and additionally an accessory equipment such as a thickening device is required in order to reduce a load for a separator. Such an addition of devices and equipment leads to an elevation of costs.

We have further studied and proposed a process for the solid-solution separation of sulfur particles in a floating state using an adsorbent as disclosed in Japanese Patent Publication (laid-open) no. 112,403/1988 and a process for recovering sulfur by leading floating sulfur particles to a sedimentation separator and then to a solid-solution separator in order to reduce a load upon the solid-solution separator as disclosed in Japanese Patent Publication (laid-open) No. 58,323/1989. Those processes which involve treating a solid-solution slurry after absorption of hydrogen sulfide-containing gases in an iron salt aqueous solution containing a trivalent iron ion pose the problems that an amount of floating sulfur particles may increase due to a type of an absorbing tower or due to operating conditions and that an apparatus such as the sedimentation separator and the solid-solution separator should be made large. Furthermore, an inner structure of the absorbing tower should be made complex that treating steps require more stages, whereby the process becomes so complicated.

Therefore, the present invention has the object to provide a method for the recovery of sulfur from an absorbing tower, which permits a ready separation and recovery of sulfur, simplifies steps of treating an absorbing solution, and miniaturizes the equipment to be used therefor. This process futher improves operation performance because an amount of sulfur adhered to the inside of an absorbing tower becomes small, thus capable of recovering sulfur from hydrogen sulfide with high efficiency.

In order to achieve the object, the present invention consists of the process comprising reacting hydrogen sulfide-containing gases with an iron salt aqueous solution containing a trivalent iron ion at temperatures which is above a melting point of sulfur, and separating sulfur in a molten state.

The method for the recovery of sulfur in accordance with the present invention is characterized by reacting the hydrogen sulfide-containing gases with the iron salt aqueous solution containing the trivalent iron ion at temperatures above the melting point of sulfur and separating the sulfur formed in a molten state.

The method for the recovery of sulfur in accordance with the present invention is furthermore characterized by recovering hydrogen and the iron salt aqueous solution containing the trivalent iron ion by electrochemically treating the aqueous solution obtained by separation of sulfur therefrom on top of a recovery of sulfur in a molten state by means of the reaction of the hydrogen sulfide-containing gases with the iron salt aqueous solution.

FIGURE is a schematic view showing an outline of one example of an apparatus to be used for the process in accordance with the present invention.

In one aspect of the present invention, the process is to recover sulfur by reacting the hydrogen sulfide-containing gases with the iron salt aqueous solution containing the trivalent iron ion at temperatures above a melting point of sulfur and separating the sulfur in a molten state.

In another aspect of the present invention, the process is to recover hydrogen from the iron salt aqueous solution containing the trivalent iron ion by means of the electrochemical treatment after recovery of sulfur in a molten state.

As have been briefly described hereinabove, it is to be noted that the present invention is to recover sulfur and hydrogen by decomposition of hydrogen sulfide gas. Thus, gases to be treated for the process of the present invention are not restricted to a gas consisting of hydrogen sulfide alone. The hydrogen sulfide-containing gases may additionally contain, for example, gases inert against the trivalent iron ion, such as hydrogen, carbon monooxide, carbon dioxide, hydrocarbon, ammonia, nitrogen, or steam.

The ferric salt aqueous solution containing the trivalent iron ion (ferric ion) to be used as the absorbing solution may include, for example, ferric chloride aqueous solution, ferric sulfate aqueous solution, ferric phosphate aqueous solution, ferric nitrate solution and ferric oxalate aqueous solution. The ferric salt aqueous solution may additionally contain a free acid such as hydrochloric acid, sulfuric acid, phosphoric acid, nitric acid and oxalic acid in order to facilitate an electrochemical treatment at a subsequent step. The ferric chloride aqueous solution containing a free acid such as hydrochloric acid is more preferred.

The ferric salt aqueous solution does not usually contain a ferrous salt, however, it may additionally contain a ferrous salt in an amount which does not impair the object of the present invention.

An amount of the ferric salt in the ferric salt aqueous solution may be in the range generally from 0.1 to 5 moles per kg of water and an amount of the free acid may be in the range preferably from 0.5 to 15 moles per kg of water.

Procedures of contacting the hydrogen sulfide or the hydrogen sulfide-containing gases with the ferric salt aqueous solution containing the trivalent iron ion may include any customary one for absorbing gases in a liquid, for example, using a conventional absorbing tower. The absorbing tower may not be restricted to any particular type and may include, for example, bubble tower, spray tower, wetting wall tower, agitating tower, bubble packed tower, and packed tower.

In accordance with the present invention, hydrogen sulfide is contacted, for example, with the ferric chloride aqueous solution to form sulfur in accordance with the following reaction scheme:

$$2FeCl_3 + H_2S \rightarrow 2FeCl_2 + 2HCl + S \qquad (1)$$

As is apparent from the above scheme, hydrogen sulfide ($H_2S$) is oxidized with ferric chloride ($FeCl_3$) to form sulfur (S) while the ferric chloride is reduced to ferrous chloride ($FeCl_2$).

In accordance with the present invention, the reaction of hydrogen sulfide with ferric chloride by contacting the hydrogen sulfide gas or the hydrogen sulfide-containing gases with the ferric salt aqueous solution containing the trivalent iron ion should be carried out at temperatures above the melting point of sulfur.

It should be noted herein that sulfur includes several allotropes having different melting points. For example, amorphous sulfur has a melting point of 120°C, monoclinic sulfur has a melting point of 119°C, and rhombic sulfur has a melting point of 112.8°C. Thus the temperatures at which hydrogen sulfide is contacted with the ferric salt aqueous solution may range generally above 120°C, preferably from 120°C to 150°C. If the temperature is below the lower limit, on the one hand, sulfur cannot be formed in a molten state so that separation of sulfur from the aqueous solution becomes difficult and sulfur cannot be recovered in a high purity. If the temperature is above the upper limit, on the other hand, a viscosity of sulfur in a molten state becomes so high that handling becomes laborious and inconvenient.

3

Pressures at which hydrogen sulfide or hydrogen sulfide-containing gases are contacted with the ferric salt aqueous solution containing the trivalent iron ion are not restricted to a particular range and may be sufficient as long as the temperatures can be kept in the desired range.

The sulfur in a molten state precipitates or sediments by a difference of specific gravities so that the sulfur can be separated and recovered, for example, by withdrawing it from a bottom portion of the reactor.

It is further to be noted that the iron salt aqueous solution after separation of sulfur in a molten state contains ferrous chloride and hydrogen chloride, as is apparent from the above reaction scheme (1).

The resulting iron salt aqueous solution is then electrochemically treated to generate hydrogen gas while converting the ferrous ion to the ferric ion, thus separating pure hydrogen gas from the ion salt aqueous solution containing the trivalent iron ion. The ferric salt aqueous solution can be re-used as an absorbing solution.

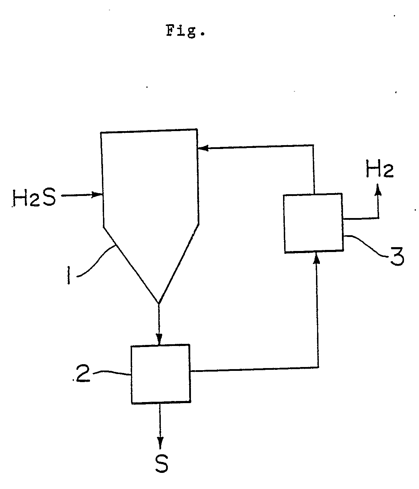

The present invention will be described more in detail by way of one example of preferred embodiments with reference to the accompanying drawing.

As shown in FIGURE, an absorbing tower 1 is charged with hydrogen sulfide gas ($H_2S$) as a gas to be treated and the iron salt aqueous solution containing the trivalent iron ion, preferably for example, ferric chloride aqueous solution. As the ferric salt aqueous solution, it is preferred from the viewpoint of efficiency that a freshly prepared solution is introduced in the absorbing tower 1 in an initial stage of contacting and the ferric salt aqueous solution recovered electrochemically from an electrochemically regenerating device 3 after the system starts operating.

The inside of the absorbing tower 1 is heated with a heating device (not shown) to temperatures above the melting point of sulfur.

Contacting the hydrogen sulfide with the ferric salt aqueous solution in the absorbing tower 1 causes the reaction as represented by the above formula (1) to proceed thereby forming sulfur in a molten state. At this time, sulfur is heated in this reaction system at temperatures above its melting point so that sulfur does not adhere to an inner wall of the absorbing tower 1.

The sulfur formed is then fed to a sulfur separating device 2 together with the ferric chloride aqueous solution. The inside of the sulfur separating device may be preferably heated at temperatures above the melting point of sulfur with a heater (not shown). As the sulfur formed in a molten state can be separated by precipitation or sedimentation based on a difference of specific gravities. The sulfur separated by precipitation or sedimentation is the recovered from the bottom portion of the sulfur separating device 2. As the sulfur is formed in a molten state, an inner structure of the sulfur separating device 2 may be simplified.

The sulfur separating device is not necessarily required as a separate equipment, and the absorbing tower 1 may be used also as a sulfur separating device from a bottom portion of which the sulfur formed is separated.

After recovery of the sulfur from the sulfur separating device 2, the iron salt aqueous solution left therein is then transferred to an electrochemically regenerating device 3 such as an electrolytic vessel where the divalentt iron ion, in turn, is electrically oxidized to the trivalent iron ion in accordance with the following reaction scheme:

$$2FeCl_2 + 2HCl \rightarrow 2FeCl_3 + H_2\uparrow \qquad (2)$$

An apparatus to be used for the electrochemical treatment may be an electrolytic vessel of any customary type. The electrolytic vessel is provided with a partition between its anode and cathode. For electrodes, there may be preferably used an acid resisting material such as graphite, carbon fiber and the like and, as the partition, there may be preferably used a hydrogen-ion selectively permeable membrane.

Electrolysis may be carried out by applying voltages while the iron salt aqueous solution containing the divalentt iron ion obtained by the above treatment is introduced in an anode chamber of the electrolytic vessel 3 and an aqueous solution containing hydrogen ion in a given concentration is introduced in the cathode chamber thereof or replenishing water in an amount which does not get dry the partition between the anode and the cathode. This electrolysis treatment causes the divalentt iron ion to be oxidized to the trivalent iron ion at the anode while hydrogen is generated at the cathode.

When the hydrogen-ion selectively permeable membrane is used as the partition, there may be directly attached, if necessary, to the membrane a porous electrode of gas dispersibility, for example, graphite fiber cloth, preferably with a catalyst such as platinum deposited or supported thereon.

The electrolysis may be carried out usually at room temperature or at elevated temperatures.

It is preferred that the iron salt aqueous solution containing the divalentt iron ion may preferably contain the free acid in an amount ranging generally from 0.5 moles to 15 moles per kg of water in order to reduce a cell voltage during electrolysis. It is to be noted herein that the term "free acid" or related term referred to in this specification is intended to mean an acid which is not involved with a redox reaction of iron ion.

As have been described hereinabove, the iron salt aqueous solution containing the divalentt iron ion, from which the sulfur formed has been removed, is treated electrochemically to generate hydrogen as well as the divalentt iron ion is regenerated to the trivalent iron ion which, in turn, is used as a treating solution in a repeated manner for the absorbing tower 1.

If concentrations of sulfur in the iron salt aqueous solution to be fed to the electrolytic vessel are high, a current density per electrode area unit of the electrolytic vessel is lowered, in other words, an electrolysis performance is reduced, so that sulfur in the iron salt aqueous solution to be fed to the electrolytic vessel 3 is preferably removed as much as possible.

If desired, a filter or a preliminary electrolytic vessel may be provided in front of the electrolytic vessel 3.

The process according to the present invention permits a separation of sulfur in a molten state, thereby minimizing an amount of sulfur remained in the iron salt aqueous solution and imp[roving an electrolysis performance.

The present invention will be described more in detail by way of examples.

### Example 1:

This Example is directed to a recovery of sulfur from hydrogen sulfide in a closed system using an apparatus as shown in FIGURE. As an absorbing tower was used an absorbing tower of a bubble type.

The absorbing tower was charged with an absorbing solution containing trivalent iron ion ($FE^{2+}/Fe^{3+}/HCl$ = 1.0/0.7/4.5 mol/liter) so as to amount to a solution volume of 2.5 liters and a solution depth of 14 cm.

The absorbing tower was kept at the temperature of 130 °C and at the pressure of 2 $kg/cm^2 \cdot G$. Hydrogen sulfide-containing gases $H_2S$: 32%; $H_2$: 68%) were blown in the tower for one hour through a single hole nozzle (an inner diameter: 4 mm). Absorbing operation was carried out batchwise.

Table 1 below shows rates of absorbing hydrogen sulfide and recovering sulfur, and residual sulfur.

As is apparent from Table 1 below, as sulfur was separated in a molten state, an extremely high rate of recovering sulfur was achieved while a rate of residual sulfur in the absorbing tower was reduced to a remarkable extent.

### Examples 2 - 3:

The procedures were followed in substantially the same manner as in Example 1 with the exception that the composition of the absorbing solution as shown in Table 1 below was employed in place of the composition thereof used in Example 1.

As is apparent from Table 1 below, as sulfur was separated in a molten state, an extremely high rate of recovering sulfur was achieved while a rate of residual sulfur in the absorbing tower was reduced to a remarkable extent.

### Example 4:

The procedures were followed in substantially the same manner as in Example 1 with the exception that a nozzle type was changed to that as shown in Table 1 below.

As is apparent from Table 1 below, as sulfur was separated in a molten state, an extremely high rate of recovering sulfur was achieved while a rate of residual sulfur in the absorbing tower was reduced to a remarkable extent.

### Comparative Examples 1 - 2:

Except for using the temperature at 70 °C, the procedures were followed in substantially the same manner for Comparative Example 1 as in Example 1 and for Comparative Example 2 as in Example 4.

Results are shown in Table 2 below.

As is apparent from Table 2 below, it has been found that a rate of recovering sulfur was remarkably lower than Examples 1 to 4.

Example 5:

This Example is directed to a continuous absorption operation using an absorbing tower of a bubble packed type having an inner diameter of 200 mm and a solution depth of 600 mm in which Raschig rings having a representative length of 12 mm were packed.

The absorbing tower was charged from its tower top with an absorbing solution containing trivalent iron ion and having a composition of $FE^{2+}/FE^{3+}/HCl = 1.1/0.6/4.5$ mol/liter at the rate of 0.5 liter per minute and the absorbing solution was subjected to continuous absorption operation. The absorbing solution was then drawn from its tower bottom and sulfur was separated therefrom. The solution was subjected to oxidation of a divalentt iron ion to a trivalent iron ion in an electrolytic vessel and then supplied again to the absorbing tower. While the tower was kept at the inner temperature of $130°C$ and at the pressure of 3 kg/cm2•G, hydrogen sulfide-containing gases having a composition of 40% of $H_2S$ and 60% of $N_2$ were fed at the rate of 1.2 N liter per minute.

A rate of absorbing hydrogen sulfide was given from the compositions at an inlet and outlet of the absorbing tower when the inside of the system has reached a stationary state after the start of operation. The rate is shown in Table 3 below. A rate of recovering sulfur is also shown in Table 3 below. As is apparent from Table 3 below, it has been found that the continuous absorption operation gave an absorption rate of hydrogen sulfide as well as a recovery rate of sulfur as high as in Examples 1 to 4.

In an electrolytic vessel, the divalentt iron ion was oxidized to the trivalent iron ion by application of a current required for maintaining the solution composition in the reaction system at a constant level.

Examples 6 to 8:

The procedures were followed in substantially the same manner as in Example 5 with the exception that hydrogen sulfide-containing gases with the composition as shown in Table 3 below and containing additionally carbon dioxide were used.

Results are shown in Table 3 below.

It is found that the presence of acid gases such as carbon dioxide can permit a selective absorption of hydrogen sulfide and a high recovery of sulfur.

As have been described hereinabove, the method for the recovery of sulfur in accordance with the present invention can recover sulfur formed in a molten state by contacting and reacting the hydrogen sulfide-containing gases with the iron salt aqueous solution containing a trivalent iron ion at temperatures above the melting point of sulfur to be formed and, furthermore, reuse an absorbing solution of hydrogen sulfide by regenerating the trivalent iron ion from the divalentt iron ion and recover hydrogen generated by an electrochemical treatment of the iron salt aqueous solution from which sulfur formed has been recovered. Thus, the process permits an extremely ready separation and recovery of sulfur and can simplify a post-processing of the iron salt aqueous solution after absorption of the hydrogen sulfide in the iron salt aqueous solution, thus simplifying the system itself and minimizing a size of the apparatus.

As the electrochemical treatment of the iron salt aqueous solution after separation of sulfur formed enables a reuse of the trivalent iron ion, the process according to the present invention permits an extremely effective recovery of sulfur from the hydrogen sulfide-containing gases and additionally permits a recovery of hydrogen generated by electrochemical treatment, thus capable of applying hydrogen to various usages.

The present invention may be embodied in other specific forms without departing from the spirit and scope thereof. The present embodiments as have been described hereinabove are therefore to be considered in all respects as illustrative and not restrictive, the scope of the invention being indicated by the appended claims, and all the changes and modifications which come within the meaning and range of equivalency of the claims are therefore intended to be encompassed within the spirit and scope of the invention.

EP 0 348 875 A2

TABLE 1

| | EXAMPLES | | | |
|---|---|---|---|---|
| | 1 | 2 | 3 | 4 |
| Type of Nozzle | 4mm Single-hole Nozzle | 4 mm Single-hole Nozzle | 4 mm Single-hole Nozzle | Ball Filter #2 (Kinoshita Type) |
| Composition of Absorbing Solution (mol/l) ($Fe^{2+}$/$Fe^{3+}$/HCl) | 1.0/0.7/4.5 | 0/2.3/4.5 | 0.4/1.9/4.5 | 1.0/0.7/4.5 |
| Absorbing Temp. ($^\circ$C) | 130 | 130 | 130 | 130 |
| Absorbing Pressures ($kg/cm^2 \cdot G$) | 2 | 2 | 2 | 2 |
| Rate of $H_2S$ Absorption (%) | 47 | 71 | 61 | 68 |
| Rate of Sulfur Recovery (%) | 98 | 99 | 97 | 97 |
| Rate of Residual Sulfur (%) | 2 | 1 | 3 | 3 |

TABLE 2

| | Comparative Examples | |
|---|---|---|
| | 1 | 2 |
| Type of Nozzle | 4mm Single-hole Nozzle | Ball Filter #2 (Kinoshita Type) |
| Composition of Absorbing Solution (mol/l) ($Fe^{2+}$/$Fe^{3+}$/HCl) | 1.0/0.7/4.5 | 1.0/0.7/4.5 |
| Absorbing Temp. ($^\circ$C) | 70 | 70 |
| Absorbing Pressures ($kg/cm^2 \cdot G$) | 2 | 2 |
| Rate of $H_2S$ Absorption (%) | 57 | 78 |
| Rate of Sulfur Recovery (%) | 70 | 65 |
| Rate of Residual Sulfur (%) | 30 | 35 |

7

TABLE 3

| | EXAMPLES | | | |
|---|---|---|---|---|
| | 5 | 6 | 7 | 8 |
| Composition of Absorbing Solution (mol/l) ($Fe^{2+}$/$Fe^{3+}$/HCl) | 1.1/0.6/4.5 | 1.1/0.6/4.5 | 1.1/0.6/4.5 | 1.1/0.6/4.5 |
| Absorbing Temp. ($^\circ$C) | 130 | 130 | 130 | 130 |
| Absorbing Pressures ($kg/cm^2 \cdot G$) | 3 | 3 | 3 | 3 |
| Composition of Absorbing Gas ($H_2S/N_2/CO_2$)(%) | 40/60/0 | 40/48/12 | 41/33/26 | 38/56/6 |
| Rate of Sulfur Absorption (%) | 99.9 | 99.8 | 99.8 | 99.2 |
| Rate of Sulfur Recovery (%) | 94 | 96 | 95 | 95 |

Claims

1. A method for the recovery of sulfur, comprising:
the step of contacting a hydrogen sulfide-containing gas with an iron salt aqueous solution containing a trivalent iron ion at a temperature which is above a melting point of sulfur; and
the step of separating the resulting sulfur in a molten state.

2. A method for the recovery of sulfur, comprising:
the step of contacting a hydrogen sulfide-containing gas with an iron salt aqueous solution containing a trivalent iron ion at a temperature which is above a melting point of sulfur;
the step of separating the resulting sulfur in a molten state;
the step of electrochemically treating the aqueous solution obtained by separation of the sulfur; and
the step of recovering hydrogen and the iron salt aqueous solution containing the trivalent iron ion.

3. A method as claimed in claim 1 or 2, wherein said iron salt aqueous solution containing a trivalent iron ion contains an acid in a free state.

4. A method as claimed in claim 3, wherein said iron salt aqueous solution is a ferric chloride aqueous solution.

5. A method as claimed in claim 3, wherein said acid is hydrochloric acid.

6. A method as claimed in claim 1 or 2, wherein a ferric salt in said iron salt aqueous solution containing a trivalent iron ion is in a range from 0.1 to 5 moles per kg of water.

7. A method as claimed in claim 3, wherein said acid is contained in an amount ranging from 0.5 to 15 moles per kg of water.

8. A method as claimed in claim 2, wherein the step of electrochemically treating the aqueous solution obtained by separation of the sulfur is carried out by electrolysis.

Fig.